# EUROPEAN PATENT APPLICATION

(11) **EP 4 604 420 A1**
(43) Date of publication of application: **20.08.2025**
(21) Application number: 23881173.1
(22) Date of filing: 11.05.2023
(51) Int. Cl.: H04B 10/079

(54) **OPTICAL PATH CONTAMINATION IDENTIFICATION METHOD AND APPARATUS**

(30) Priority: 24.10.2022 CN 202211304100
(71) Applicant: Huawei Technologies Co., Ltd., Shenzhen, Guangdong 518129 (CN)
(72) Inventor: CHEN, Jiabao, Shenzhen, Guangdong 518129 (CN); HU, Hongfei, Shenzhen, Guangdong 518129 (CN); CHEN, Shikai, Shenzhen, Guangdong 518129 (CN); ZHOU, Bing, Shenzhen, Guangdong 518129 (CN); MOU, Yongzhao, Shenzhen, Guangdong 518129 (CN)
(74) Representative: Goddar, Heinz J.
(86) International application number: PCT/CN2023/093391
(87) International publication number: WO 2024/087579

(57) **Abstract**

Embodiments of this application provide an optical path dirt identification method and apparatus. The method includes: obtaining first data, where the first data is performance data that is of a port of an optical path and that is collected in a cycle; and determine, based on the first data and a dirt identification model, whether dirt occurs on the optical path, where the dirt identification model is determined by using historical performance data of the port of the first optical path. It may be determined, by using the performance data of the port of the optical path and the dirt identification model, whether degradation of the optical path is caused by dirt on an end face of the optical path. If an operation and maintenance engineer determines that degradation of the optical path is caused by dirt on the end face of the optical path, the operation and maintenance engineer can directly process the end face of the optical path, thereby further improving operation and maintenance efficiency and reducing operation and maintenance costs.

## Description

This application claims priority to Chinese Patent Application No. 202211304100.4, filed with the China National Intellectual Property Administration on October 24, 2022 and entitled "OPTICAL PATH DIRT IDENTIFICATION METHOD AND APPARATUS", which is incorporated herein by reference in its entirety.

### TECHNICAL FIELD

Embodiments of this application relate to the field of communication technologies, and more specifically, to an optical path dirt identification method and apparatus.

### BACKGROUND

With maturity of 5G slicing technologies, construction of slicing packet networks (slicing packet network, SPN) is started on a large scale at carrier sites. The SPN network has rigid requirements such as a high bandwidth/low latency, and a large quantity of optical modules that support the high bandwidth need to be used at the carrier site. Compared with a conventional non-return to zero (non-return to zero, NRZ) modulation technology, a four-level pulse amplitude modulation (four-level pulse amplitude modulation, PAM4) technology doubles a data transmission bandwidth in a same signal bandwidth, so that construction costs of the SPN network can be greatly reduced, and SPN networks have been put into large-scale commercial use at carrier sites. PAM4 belongs to high-order modulation, where four states need to be transmitted in same amplitude. Although a forward error correction (forward error correction, FEC) algorithm is used for compensation, link performance, particularly a noise tolerance capability, still significantly degrades. This imposes a high requirement on optical path quality. In particular, optical path dirt may cause a multi-path interference (multi-path interference, MPI) problem. As a result, a large quantity of forward error correction bit errors and cyclic redundancy check (cyclic redundancy check, CRC) bit errors exist on links in a live network, and a large quantity of related alarms are generated. An operation and maintenance engineer of a carrier cannot identify a real faulty link, and there is a service interruption risk.

Therefore, an identification method is urgently needed, so that an operation and maintenance engineer of a carrier can quickly and accurately determine an optical path problem, to improve operation and maintenance efficiency and reduce operation and maintenance costs.

### SUMMARY

Embodiments of this application provide an optical path dirt identification method and apparatus, to quickly and accurately determine an optical path dirt problem, reduce a service interruption risk caused by optical path dirt, and further improve operation and maintenance efficiency and reduce operation and maintenance costs.

According to a first aspect, an optical path dirt identification method is provided. The method includes: obtaining first data, where the first data is performance data that is of a port of a first optical path and that is collected in a first cycle; and determining, based on the first data and a dirt identification model, whether dirt occurs on an end face of the first optical path, where the dirt identification model is determined based on second data, the second data is performance data of the port of the first optical path in a second cycle, and the second data further includes a status of whether dirt occurs on the first optical path in the second cycle.

It should be understood that the port of the first optical path is configured to transmit an optical signal between different devices, and the end face represents a surface of a fiber head of an optical fiber connector.

Based on the foregoing solution, a related data indicator of optical link performance is obtained, and it is directly determined, based on the dirt identification model, whether degradation of the optical path is caused by a dirt problem, thereby greatly reducing costs of locating a root cause of degradation of the optical path by an operation and maintenance engineer, and also improving operation and maintenance efficiency. If the operation and maintenance engineer determines that the root cause of degradation of the optical path is a dirt problem, the operation and maintenance engineer directly clears dirt on the end face of the optical path, thereby improving operation and maintenance efficiency.

With reference to the first aspect, in some implementations of some aspects, the first data is preprocessed to obtain third data; and it is determined, based on the third data and the dirt identification model, whether dirt occurs on the end face of the first optical path.

Based on the foregoing solution, the third data is obtained by preprocessing the first data, a cause of subhealth of the optical path is directly determined based on the third data and the optical path dirt identification model, and it can be determined whether a cause of degradation of the optical path is that dirt occurs on the end face of the optical path.

With reference to the first aspect, in some implementations of some aspects, the method further includes: sending first alarm information, where the first alarm information indicates that dirt occurs on the end face of the first optical path.

Based on the foregoing solution, it is determined that the root cause of degradation of the optical path is the dirt on the end face of the optical path, and the first alarm information is sent. The operation and maintenance engineer processes the dirt on the end face of the optical path based on the first alarm information, to avoid service interruption caused by the optical path dirt, thereby improving operation and maintenance efficiency and user experience.

With reference to the first aspect, in some implementations of some aspects, before the first data is obtained, the method further includes: obtaining real-time alarm information; and determining link information of the first optical path based on the real-time alarm information, where the first optical path is a risky link.

Based on the foregoing solution, after it is determined, by using the obtained real-time alarm information, that the first optical path is a risky link, the first data of the first optical path is obtained, and it is further determined whether dirt occurs on the first optical path, to avoid a service interruption problem caused by the optical path dirt, identify the risky optical path in advance, and determine, by using the dirt identification model, whether dirt occurs, thereby improving work efficiency of the operation and maintenance engineer.

With reference to the first aspect, in some implementations of some aspects, the link information includes one or more of the following: a source element name, a source element port, a sink element name, and a sink element port.

With reference to the first aspect, in some implementations of some aspects, the first data includes one or more of the following: receive optical power, a quantity of blocks uncorrected through forward error correction FEC, a bit error rate before forward error correction FEC, a bit error rate after forward error correction FEC, a quantity of cyclic redundancy check CRC error reports, transmit optical power, input bandwidth utilization of a port of an optical path, output bandwidth utilization of a port of an optical path, a link status, and a protocol status.

According to a second aspect, an optical path dirt identification apparatus is provided. The apparatus includes: an element management module, configured to obtain first data, where the first data is performance data that is of a port of a first optical path and that is collected in a cycle; and an optical path dirt identification module, configured to determine, based on the first data and a dirt identification model, whether dirt occurs on the first optical path, where the dirt identification model is determined based on second data, the second data is performance data of the port of the first optical path in a second cycle, and the second data further includes a status of whether dirt occurs on the first optical path in the second cycle. With reference to the second aspect, in some implementations of some aspects, the optical path dirt identification module is further configured to preprocess the first data to obtain third data; and the optical path dirt identification module is further configured to determine, based on the third data and the dirt identification model, whether dirt occurs on an end face of the first optical path.

With reference to the second aspect, in some implementations of some aspects, the apparatus further includes: an alarm management module, further configured to send first alarm information, where the first alarm information indicates that dirt occurs on the end face of the first optical path.

With reference to the second aspect, in some implementations of some aspects, the optical path dirt identification module is further configured to: obtain real-time alarm information, and determine link information of the first optical path based on the real-time alarm information, where the first optical path is a risky link.

With reference to the second aspect, in some implementations of some aspects, the link information includes one or more of the following: a source element name, a source element port, a sink element name, and a sink element port.

With reference to the second aspect, in some implementations of some aspects, the first data includes one or more of the following: receive optical power, a quantity of blocks uncorrected through forward error correction FEC, a bit error rate before forward error correction FEC, a bit error rate after forward error correction FEC, a quantity of cyclic redundancy check CRC error reports, transmit optical power, input bandwidth utilization of a port of an optical path, output bandwidth utilization of a port of an optical path, a link status, and a protocol status.

For explanations and beneficial effects of related content of the apparatus provided in the second aspect, refer to those of the method shown in the first aspect. Details are not described herein again.

According to a third aspect, a computing device cluster is provided, including at least one computing device. Each computing device includes a processor and a memory. A processor of the at least one computing device is configured to execute instructions stored in a memory of the at least one computing device, to enable the computing device cluster to perform the method in any one of the implementations of the first aspect.

According to a fourth aspect, a computer program product including instructions is provided. When the instructions are run by a computing device cluster, the computing device cluster is enabled to perform the method in any one of the implementations of the first aspect.

According to a fifth aspect, a computer-readable storage medium is provided, including computer program instructions. When the computer program instructions are executed by a computing device cluster, the computing device cluster performs the method in any one of the implementations of the first aspect.

### BRIEF DESCRIPTION OF DRAWINGS

FIG. 1 is a diagram of an application scenario applicable to embodiments of this application;
FIG. 2 is a diagram of an architecture of an optical path dirt identification module 120 according to an embodiment of this application;
FIG. 3 is a detection diagram of an optical fiber splice without dirt according to an embodiment of this application;
FIG. 4 is a detection diagram of a dirty optical fiber splice according to an embodiment of this application;
FIG. 5 is a diagram of an optical path dirt identification method 500 according to an embodiment of this application;
FIG. 6 is a diagram of an optical path dirt identification method 600 according to an embodiment of this application;
FIG. 7 is a diagram of an architecture of a computing device 700 according to an embodiment of this application;
FIG. 8 is a diagram of an architecture of a computing device cluster according to an embodiment of this application; and
FIG. 9 is a diagram of a connection manner of a computing device cluster according to an embodiment of this application.

### DESCRIPTION OF EMBODIMENTS

The following describes technical solutions in this application with reference to accompanying drawings.

The method in embodiments of this application may be applied to a long term evolution (long term evolution, LTE) system, a long term evolution-advanced (long term evolution-advanced, LTE-A) system, an enhanced long term evolution (enhanced long term evolution, eLTE) system, and a 5th generation (5th Generation, 5G) mobile communication system new radio (New Radio, NR) system, or may be extended to a similar wireless communication system, such as a wireless fidelity (wireless fidelity, Wi-Fi) system, a worldwide interoperability for microwave access (worldwide interoperability for microwave access, WIMAX) system, and a 3rd generation partnership project (3rd generation partnership project, 3gpp)-related cellular system.

For clarity, the following explains some terms in embodiments of this application.

### 1. Four-level pulse amplitude modulation (four-level pulse amplitude modulation, PAM4)

PAM4 is publicly known as a multi-level signal protocol with highest scalability, for achieving a new-generation line rate. In PAM4, four different signal levels are used for signal transmission, and 2-bit logical information, namely, 00, 01, 10, or 11, may be transmitted in each clock cycle.

### 2. Slicing packet network (slicing packet network, SPN)

An architecture of the SPN may be divided into three layers. A slicing transport layer (slicing transport layer, STL) resolves a problem of a high cost performance ratio and a large capacity. PAM4-based 50GE/200GE can effectively reduce costs while meeting a 5G capacity requirement. A slicing channel layer (slicing channel layer, SCL) integrates TDM and a packet technology based on a FlexE slicing technology, and performs resource slicing isolation in one physical network to form a plurality of virtual networks to provide differentiated-SLA-based bearer services for a plurality of services. At a slicing packet layer (slicing packet layer, SPL), a transmission-oriented SR (segment routing, segment routing) technology is used to implement a connection-oriented carrier-class L3 technology. An SDN is introduced to a control plane to implement an open, agile, and efficient network operation and maintenance system. The SPN is a 5G-era-oriented enterprise standard technology of a metro transport network of China Mobile Communications Corporation.

### 3. Forward error correction (forward error correction, FEC)

Redundant data is added to original data. If the original data is lost during network transmission, the original data can be recovered from the redundant data. FEC is a technology of controlling a transmission error in a unidirectional communication system. Additional information is sent together with data to perform error recovery, to reduce a bit error rate.

### 4. Cyclic redundancy check (cyclic redundancy check, CRC)

CRC is a process of detecting an error in data transmission. In CRC check, a number is generated based on transmitted data through complex calculation. A sending device performs the calculation before sending the data, and then sends a result to a receiving device. After receiving the result, the receiving device repeats the same operation. If operation results of the two devices are the same, it is considered that transmission is correct. This process is referred to as redundancy check because each time of transmission includes not only data but also an extra (redundant) error check value.

### 5. Multi-path interference (multi-path interference, MPI)

The multi-path interference is a term in the wireless communication field, and indicates that a radio signal is divided into two or more signal copies, and the signal copies reach a receive antenna through more than one path. Sometimes, in a specific state, these signal waves interfere with each other.

### 6. Non-return to zero (non-return to zero, NRZ)

In a binary coding scheme, 1 and 0 are replaced with a high voltage and a low voltage, respectively, and no zero voltage occurs in coded bits.

### 7. Network management system (network management system, NMS)

The network management system is a management system responsible for network operation, management, and maintenance functions.

### 8. Element management system (element management system, EMS)

The element management system is element management software that complies with an ITU-T standard, and is responsible for managing one or more elements of a specific type. The element management system allows a user to independently manage all features of each element. The network management system manages communication between elements.

It should be understood that degradation of an optical path is very likely to be caused by a sudden external factor. Currently, a carrier mainly identifies optical path dirt through manual inspection (for example, periodic inspection of an operation and maintenance engineer or telephone complaints from the public) or instrument measurement (for example, observing, based on an end face inspector, an optical module, a flange, or a fiber end face on which dirt may occur). Subjective observation is mainly performed by using naked eyes, to determine whether dirt occurs on an end face of an optical path. Further, there is a lack of a means to detect dirt in advance and effectively locate the dirt. In addition, the foregoing method has relatively high labor costs and device costs, relatively high maintenance costs, and relatively low efficiency.

This application provides an optical path dirt identification method, to identify, based on obtained performance data of an end face of an optical path and a dirt identification model, whether dirt occurs on the optical path, so that a warning can be given for an optical path dirt problem in a timely manner, and an operation and maintenance engineer can be accurately notified of whether degradation of the optical path is caused by optical path dirt, thereby reducing maintenance costs and improving operation and maintenance efficiency.

A product form in embodiments of this application includes but is not limited to one or more of the following:
Product form 1: Hardware form such as a chip.
Product form 2: System form such as a cloud service platform or a cloud service system.

It should be noted that the product forms in embodiments of this application are merely examples, and this is not limited in this application.

An optical cable droop identification method provided in embodiments of this application may be applied to a computing device. The computing device may also be referred to as a computing system, and includes a hardware layer, an operating system layer running above the hardware layer, and an application layer running above the operating system layer. The hardware layer includes hardware such as a processing unit, a memory, and a memory control unit. Subsequently, functions and structures of the hardware are described in detail. An operating system is any one or more types of computer operating systems that implement service processing by using a process (process), for example, a Linux operating system, a Unix operating system, an Android operating system, an iOS operating system, or a Windows operating system. The application layer includes application programs such as Browser, Contacts, word processing software, and instant messaging software. In addition, optionally, the computing system is a handheld device such as a smartphone, or a terminal device such as a personal computer. This is not particularly limited in this application, provided that the method provided in embodiments of this application can be implemented. The optical path dirt identification method provided in embodiments of this application may be executed by a computing system, or may be executed by a functional module that is in the computing system and that can invoke a program and execute the program.

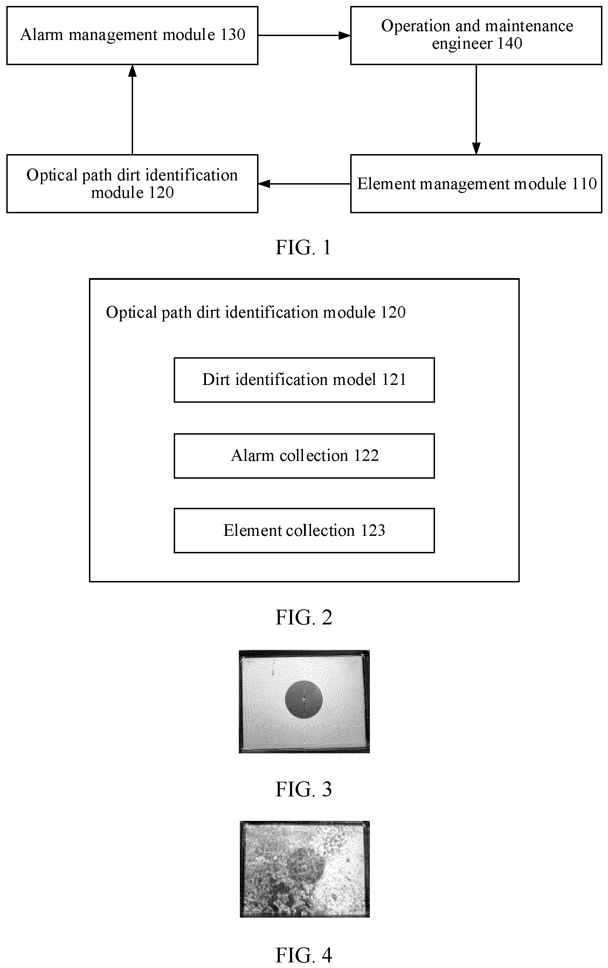

The following describes, with reference to FIG. 1, an application scenario applicable to embodiments of this application.

FIG. 1 is a diagram of an application scenario applicable to embodiments of this application. As shown in FIG. 1, the application may include an element management module 110, an optical path dirt identification module 120, an alarm management module 130, and an operation and maintenance engineer 140.

The alarm management module 110 can store alarm information reported by the element management module 130, and improve an alarm information query capability.

The optical path dirt identification module 120 collects alarm information, element information, and performance information of a port of an optical path. In addition, the optical path dirt identification module 120 identifies, by using an optical path dirt identification model, whether dirt is generated on the optical path.

The element management module 130 may report related alarm information (for example, a port bit error) to the alarm management module 110 when a fault occurs on an element. The optical path dirt identification module 120 may further query element information (for example, an element name and a port name) and query performance information.
1. Element management module 110: The element management module 110 may report related alarm information (for example, a port bit error) to the alarm management module 120 when a fault occurs on an element. In addition, the element management module 110 further queries element information (for example, an element name and a port name) and queries performance information. The element management module 110 may be deployed in a network management system NM, or may be deployed in an element management system EMS. The NMS is configured for network operation, management, and maintenance, and may also be referred to as a cross-region management system. The EMS is configured to manage one or more elements of a specific type, and may also be referred to as a domain management system or a single-domain management system. For example, the network management module 110 may exchange information with the alarm management module and/or the optical path dirt identification module, for example, referring to FIG. 1.
2. Optical path dirt identification module 120: The optical path dirt identification module 120 collects alarm information, element information, and performance information, and identifies, based on a dirt identification model, whether an optical link is dirty. The optical path dirt identification module 120 includes dirt identification, alarm collection, and element collection. The alarm information is obtained from the alarm management module 130 or the element management module 110 through the alarm collection. The element information and the performance information may be obtained from the element management module 110.
3. Alarm management module 130: The alarm management module 130 stores alarm information (referred to as first alarm information in embodiments of this application) reported by an element, and provides an alarm information query capability. The alarm management module 120 includes an alarm storage. The alarm storage is configured to store the alarm information reported by the element. The alarm information includes an alarm name, an element name, locating information, alarm reporting time, an alarm clearance status, or the like.

It should be noted that, in FIG. 1, an example in which the element management module 110 may be connected to the alarm management module and/or the optical path dirt identification module is used for description. The element management module 110, the alarm management module 120, and the optical path dirt identification module 130 may be deployed in different devices. For example, the element management module 110 and the alarm management module 120 may be deployed in an NMS, and the optical path dirt identification module 130 may be deployed in a network device. Alternatively, the element management module 110, the alarm management module 120, and the optical path dirt identification module 130 may be deployed in a same device. For example, the element management module 110, the alarm management module 120, and the optical path dirt identification module 130 may be deployed in a same network device or core network element. This is not particularly limited in this application.

It should be further noted that, although not shown in the figure, a communication system 100 may include a plurality of element management elements. For example, element management elements may be separately deployed in an NMS and an EMS. The communication system 100 may alternatively include a plurality of alarm management modules or optical path dirt identification modules. A quantity of elements with an element management function, a quantity of elements with an alarm management function, and a quantity of elements with an optical path dirt identification function are not limited in this application.

The optical path dirt identification module 120 includes a dirt identification model 121, alarm collection 122, and element collection 123. This is specifically shown in FIG. 2.

The element collection 123 is configured to collect performance data of a port of an optical path, element information, performance information, and the like.

Specifically, a risky link (a local element or a peer element) is selected by using the alarm collection 122, and a root cause of a risk of the optical path is demarcated based on a performance data profile (for example, a bit error before FEC and receive optical power) of the selected element, to determine whether dirt occurs on an end face of the optical path, and perform notification and presentation on the element in an alarm manner. It is determined, mainly through further identification by using the dirt identification model 121, whether dirt occurs on the optical path.

For example, the following describes a training process of the dirt identification model 121.

It should be noted that, for different optical paths or environments, specific key experimental indicators may be different. Data that is in the dirt identification model and that is listed in this application is merely an example, and does not impose any limitation on the technical solutions of this application.

### Experiment 1:

Key indicator data of a port of a normal optical path

**Table 1**

| Quantity of blocks uncorrected through FEC | Bit error rate before FEC | Bit error rate after FEC | Quantity of CRC error packets | Receive optical power | Transmit optical power | Input bandwidth utilization of the port | Output bandwidth utilization of the port | Link/Protocol status |
|---|---|---|---|---|---|---|---|---|
| 0 | 7.74E-0 9 | 0.00E+0 0 | 0 | -6.17 | 4.15 | 0.01% | 0.01% | UP |

Based on the related key indicator data in Table 1, with reference to a detection diagram of an optical fiber splice without dirt in FIG. 3, it can be learned that, when the key indicator data of the normal optical path is the data in Table 1, the optical path is a normal optical path without dirt.

### Experiment 2:

Key indicator data of a port of an optical path with a dirty end face

**Table 2**

| Quantity of blocks uncorrected through FEC | Bit error rate before FEC | Bit error rate after FEC | Quantity of CRC error packets | Receive optical power | Transmit optical power | Input bandwidth utilization of the port | Output bandwidth utilization of the port | Link/Protocol status |
|---|---|---|---|---|---|---|---|---|
| 1635 | 1.13E-0 4 | 2.34E-0 6 | 0 | -6.56 | 4.16 | 0.01% | 0.01% | UP |
| 1695 | 1.14E-0 4 | 2.54E-0 6 | 0 | -6.56 | 4.16 | 0.01% | 0.01% | UP |

Based on the related key indicator data in Table 1, with reference to a detection diagram of a dirty optical fiber splice in FIG. 4, it can be learned that, compared with the key indicator data of the normal optical path in Table 1, the key indicator data of the optical path with the dirty end face has great changes in related values of the quantity of blocks uncorrected through FEC, the bit error rate before FEC, the bit error rate after FEC, and the receive optical power.

### Experiment 3:

Key indicator data of a port corresponding to an optical path with a bent optical cable

**Table 3**

| Quantity of blocks uncorrected through FEC | Bit error rate before FEC | Bit error rate after FEC | Quantity of CRC error packets | Receive optical power | Transmit optical power | Input bandwidth utilization of the port | Output bandwidth utilization of the port | Link/Protocol status |
|---|---|---|---|---|---|---|---|---|
| 1037 | 4.16E-0 5 | 1.45E-0 6 | 0 | -18.25 | 4.16 | 0.01% | 0.01% | UP |

Based on a comparison between the related key indicator data in Table 3 and the key indicator data in Table 1 and Table 2, it can be learned that the key indicator data of the port of the optical path with the bent optical cable has great changes in related values of the bit error rate before FEC, the bit error rate after FEC, and the receive optical power respectively.

Based on the foregoing experiments 1, 2, and 3 and the key indicator data in Table 1, Table 2, and Table 3, it can be learned that, when a fiber end face has no dirt (an optical path is normal), an order of magnitude of a bit error rate before FEC is E⁻⁹ to E⁻⁸, and receive optical power is normal; when dirt exists on a fiber end face, an order of magnitude of a bit error rate before FEC is E⁻⁴ to E⁻⁵, a quantity of blocks uncorrected through FEC constantly increases with time, receive optical power has a slight decrease (within 1 dBm) compared with a normal value, and there is no weak-light alarm, and when an optical cable is bent, an order of magnitude of a bit error rate before FEC increases to E⁻⁴ to E⁻⁵, receive optical power decreases to -18 dBm, and a weak-light alarm occurs.

It should be understood that, compared with other types of optical path risks, due to fiber end face dirt, a decrease of receive optical power is not significant (usually less than 1 dBm), and a bit error rate before FEC significantly increases with magnitude of dirtiness. In addition, end face dirt has more obvious impact on a bit error when being closer to a fiber core area. A plurality of passive fiber patch cords exist on an optical link path. When dirt is generated on a fiber end face, multi-path interference (MPI) is caused, so that bit errors of the link gradually increase. Because MPI phenomenon is not directly associated with optical power, the fiber end face dirt does not directly cause relatively large impact on receive optical power.

It should be further understood that an optical path dirt risk and another risk may be further distinguished by using sensitivity of the optical path dirt risk and the another optical path risk to a key indicator such as receive optical power/a bit error before FEC in a degradation process and a comprehensive association between other performance indicators.

With reference to the foregoing related experiments of the dirty optical path and the non-dirty optical path, an end face inspector is used to detect whether a dirt status of a fiber end face meets a fiber end face quality evaluation standard of IEC 61300-3-35, a label indicating whether the fiber end face is dirty is attached, and key optical path performance indicators in several cycles, namely, first data, are collected to form several samples for establishment of a dirt identification model. The first data may include at least one of a bit error rate before FEC, a bit error rate after FEC, a quantity of blocks uncorrectable through FEC, a quantity of CRC check error packets, receive optical power, transmit optical power, port bandwidth utilization, and the like.

It should be understood that, in the dirt identification samples, main features are determined by using a principal component analysis means, models are established by using a plurality of machine learning methods, and identification advantages and disadvantages of the models established by using the various methods are compared. For example, an optimal machine learning model is determined as an xgboost model.

The dirt identification model is established by using the foregoing method. When an optical path subhealth problem occurs, the optical path dirt identification module determines, with reference to a bit error alarm and a performance key indicator of a port by using the dirt identification model, whether dirt occurs on an optical path; and then, demarcates a root cause of subhealth of the optical path, and performs matching on an alarm reported by the network management system and a collected performance indicator of the port of the optical path to determine whether degradation of the optical path is caused by optical fiber port dirt. In this way, a risk can be identified in advance, and it can be determined whether dirt occurs, to avoid a service terminal caused by optical path dirt, and quickly and accurately locate a bit error problem, thereby improving operation and maintenance efficiency and reducing operation and maintenance costs.

For the descriptions in FIG. 2, the module is used as an example of a software functional unit, and the optical path dirt identification module 120 may include code running on a computing instance. The computing instance may be at least one of computing devices such as a physical host (computing device), a virtual machine, and a container. Further, there may be one or more computing devices. For example, an analysis module 122 may include code running on a plurality of hosts/virtual machines/containers. It should be noted that the plurality of hosts/virtual machines/containers used to run the application program may be distributed in a same region (region), or may be distributed in different regions. The plurality of hosts/virtual machines/containers used to run the code may be distributed in a same AZ, or may be distributed in different AZs. Each AZ includes one data center or a plurality of data centers that are geographically close to each other. Usually, one region may include a plurality of AZs.

Similarly, the plurality of hosts/virtual machines/containers used to run the code may be distributed in a same virtual private cloud (virtual private cloud, VPC), or may be distributed in a plurality of VPCs. Usually, one VPC is set in one region. A communication gateway needs to be set in each VPC for communication between two VPCs in a same region or cross-region communication between VPCs in different regions. Interconnection between VPCs is implemented through the communication gateway.

The module is used as an example of a hardware functional unit, and the optical path dirt identification module 120 may include at least one computing device, for example, a server. Alternatively, the optical path dirt identification module 120 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field-programmable gate array (field-programmable gate array, FPGA), generic array logic (generic array logic, GAL), or any combination thereof.

A plurality of computing devices included in the optical path dirt identification module 120 may be distributed in a same region, or may be distributed in different regions. Similarly, a plurality of computing devices included in the optical path dirt identification module 120 may be distributed in a same VPC, or may be distributed in a plurality of VPCs. The plurality of computing devices may be any combination of computing devices such as a server, an ASIC, a PLD, a CPLD, an FPGA, and GAL.

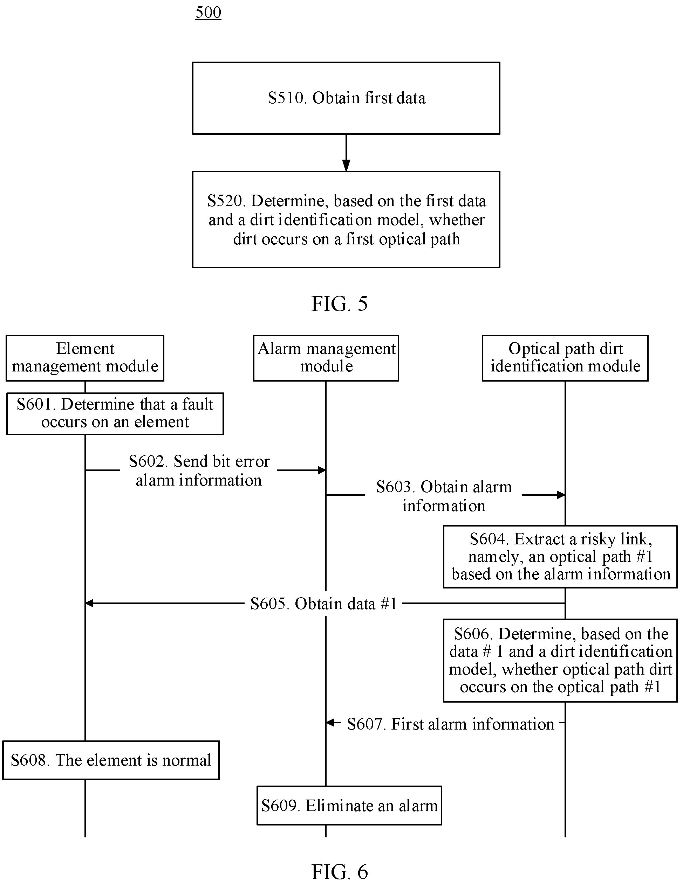

FIG. 5 is a diagram of an optical path dirt identification method 500 according to an embodiment of this application. The method 500 may include the following steps.

S510. Obtain first data.

Specifically, an optical path dirt identification module periodically obtains performance data of a port of a first optical path from an element management module. The first data is performance data that is of the port of the first optical path and that is collected in a cycle.

As an example, the optical path dirt identification module may obtain the first data from the element management module in a specific time period (for example, 6 hours) at a cycle of 15 minutes.

Optionally, the first data includes one or more of the following: receive optical power, a quantity of blocks uncorrected through FEC, a bit error rate before FEC, a bit error rate after FEC, and a quantity of CRC error reports.

Optionally, the first data may further include one or more of the following: transmit optical power, input bandwidth utilization of a port of an optical path, output bandwidth utilization of a port of an optical path, a link status, and a protocol status.

S520. Determine, based on the first data and a dirt identification model, whether dirt occurs on the first optical path.

Specifically, the optical path dirt identification module determines, based on the first data and the dirt identification model, whether dirt occurs on the first optical path.

In a possible implementation, the optical path dirt identification model preprocesses the obtained first data to obtain third data; and determines, by using the third data and the dirt identification model, whether dirt occurs on an end face of the first optical path. When the third data meets the dirt identification model, it is determined that dirt occurs on the end face of the first optical path.

Optionally, the optical path dirt identification model determines that dirt occurs on the end face of the first optical path, and the optical path dirt identification model sends first alarm information, where the first alarm information indicates that dirt occurs on the end face of the first optical path.

It should be understood that, the optical path dirt identification model sends the first alarm information to notify an operation and maintenance engineer of dirt on the end face of the first optical path, so that the operation and maintenance engineer can process dirt on the end face of the first optical path in a timely manner, to eliminate an optical path dirt alarm, thereby improving operation and maintenance efficiency.

Optionally, before step S510, the method shown in FIG. 5 may further include:
obtaining real-time alarm information, and determining link information of the first optical path based on the real-time alarm information.

Specifically, the optical path dirt identification module obtains the real-time alarm information from an alarm management module, and determines and obtains the link information of the first optical path based on the real-time alarm information. The optical path dirt identification module determines that the first optical path is a risky link.

Optionally, the link information includes one or more of the following: a source element name, a source element port, a sink element name, and a sink element port.

It should be understood that, after determining, based on the real-time alarm information, that the first optical path is a risky link, the optical path dirt identification module obtains the first data, and further determines, based on the first data, whether a risk of the first optical path is caused by dirt, in other words, subsequently performs step S510 and step S520.

According to the method shown in FIG. 5, the optical path dirt identification model can directly determine, by using the obtained performance data (the first data) of the port of the first optical path and the dirt identification model, whether dirt occurs on the first optical path. This avoids a large quantity of devices or a large amount of time for detecting and determining a cause of degradation of the optical path when the operation and maintenance engineer determines that the optical path degrades. Instead, the operation and maintenance engineer is directly notified, by using the alarm module, that the end face of the optical path is dirty, so that the operation and maintenance engineer processes the dirt in a timely manner, and quickly and accurately determines that the first optical path is dirty, to reduce a service interruption risk caused by the optical path dirt, thereby improving operation and maintenance efficiency and reducing operation and maintenance costs.

Based on the method shown in FIG. 5, FIG. 6 is a diagram of an optical path dirt identification method 600 according to an embodiment of this application. The method 600 may include the following steps.

S601. An element management system determines that a fault occurs on an element.

Specifically, the element management system determines that a fault occurs on a key indicator of an optical path, and an element management module determines that a fault occurs on the element.

In a possible implementation, dirt on the optical path is constructed by an experimenter. The experimenter may cause, in any manner, a port of an optical fiber link to have a dirt problem. For example, the experimenter uses dust to stain an optical fiber splice, to construct dirt on an end face of the optical link. This is not limited in this application.

It should be understood that, after staining the optical fiber splice, the experimenter observes an enlarged view of a surface of the optical fiber splice and a detection result that are detected and fed back by an end face inspector, to determine whether the dirt on the optical path is successfully constructed.

It should be further understood that, the dirt is not limited to being necessarily actively constructed by the experimenter. Alternatively, a dirt problem of the optical path may be caused for another reason (for example, natural wind and sand). These are all applicable to the method provided in this embodiment of this application. This is not limited in this application.

S602. The element management system sends bit error alarm information to an alarm management system.

Specifically, when the element management system determines that a fault occurs on the key indicator of the optical path, the element management system sends the bit error alarm information to an alarm management module. Simultaneously, an optical path dirt identification module periodically obtains real-time alarm information from the alarm management system, to further identify a related problem of degradation of the optical path in the alarm information. In other words, the method shown in FIG. 6 further includes:

S603. The optical path dirt identification module obtains real-time alarm information.

Specifically, the optical path dirt identification module obtains the real-time alarm information from the alarm management module.

Correspondingly, the alarm management module sends the real-time alarm information to the optical path dirt identification module.

S604. The optical path dirt identification module obtains the real-time alarm information from the alarm management system, and extracts a risky link, namely, an optical path #1, based on the real-time alarm information.

Specifically, the optical path dirt identification module obtains alarm information from the alarm management system in real time.

In a possible implementation, the optical path dirt identification module obtains a real-time alarm by using a bit error alarm whitelist. For example, the alarm whitelist is shown in Table 4.

**Table 4**

| Bit error alarm name | Alarm name in Chinese |
|---|---|
| BEFFEC_EXC | Bit error alarm before correction |
| AFTFEC_EXC | Bit error alarm after correction |
| MAC_FCS_SD | Signal abnormality alarm |
| ETH_LINK_DOWN | Ethernet port connection fault alarm |
| ETH_LOS | Ethernet port connection loss alarm |
| LOCAL_FAULT | Local fault alarm |
| REMOTE_FAULT | Remote fault alarm |
| IN_PWR_LOW_ABN | Abnormality alarm of excessively low input power |
| IN_PWR_HIGH_ABN | Abnormality alarm of excessively high input power |
| FLEXE_LOCAL_FAULT | Local FlexE physical interface fault |
| FLEXE_REMOTE_FAULT | Remote FlexE physical interface fault |
| FLEXE_PHY_FCS_SD | FlexE physical interface overhead field bit error |
| FLEXE_PHY_LOF | FlexE physical interface frame loss |
| FLEXE_PHY_LOM | FlexE physical interface multiframe loss |
| FLEXE_CLIENT_DOWN | FlexE logical port down |

Based on the real-time alarm information, the optical path dirt identification module extracts link information of the risky link, in other words, determines that the optical path #1 is a risky link.

Optionally, the link information includes one or more of the following: a source element name, a source element port, a sink element name, a sink element port, and other information, for identifying whether the link is a risky link.

S605. The optical path dirt identification module obtains data #1 from the element management system.

Correspondingly, the element management module sends the data #1 to the optical path dirt identification module.

The data #1 is performance data of a port of the optical path #1.

Specifically, the data #1 may be referred to as the performance data of the port of the optical path #1, or may be referred to as a key performance indicator. The data #1 includes one or more of a quantity of blocks uncorrected through FEC, a bit error rate before FEC, a bit error rate after FEC, a quantity of CRC error packets, receive optical power, transmit optical power, input bandwidth utilization of a port, output bandwidth utilization of a port, a link status, a protocol status, and the like.

As a possible implementation, the optical path dirt identification module periodically and continuously collects performance data of the port of the optical path #1 in a period of time (for example, 15 minutes or 20 minutes) from the element management module.

It should be understood that the optical path dirt identification module obtains the data #1 from the element management module, and the element management module sends acknowledgment response information to the optical path dirt identification module, where the response information includes the data #1.

The optical path dirt identification module receives the response information from the element management module.

In a possible implementation, the response information may include the data #1 obtained by the optical path dirt identification module, or the response information may include determining indication information or "OK" indication information.

S606. The optical path dirt identification module determines, based on the data #1 and a dirt identification model, whether optical path dirt occurs on the optical path #1.

Specifically, after obtaining the data #1 from the element management module, the optical path dirt identification module determines, based on the data #1 and the dirt identification model in the optical path dirt identification module, whether optical path dirt occurs on the optical path #1.

In a possible implementation, after preprocessing the data #1 to obtain data #2, the optical path dirt identification module determines, based on the dirt identification model, whether dirt occurs on an end face of the optical path #1.

As an example, the optical path dirt identification module preprocesses performance data (data #1) that is of the end face of the optical path #1 and that is collected within a specific time range (for example, 6 hours) at a cycle of 15 minutes, to obtain the data #2, and then, determines, by using the dirt identification model, whether dirt occurs on the end face of the optical path #1. When the data #2 meets the dirt model, degradation of the optical path #1 is caused by end face dirt.

S607. The optical path dirt identification module sends first alarm information to the alarm management module.

Correspondingly, the alarm management module receives the first alarm information from the optical path dirt identification module.

Specifically, after determining, based on the dirt identification model, that a dirt problem occurs on the optical path, the optical path dirt identification module sends the first alarm information to the alarm management module, where the first alarm information indicates that dirt occurs on the optical path #1.

In a possible implementation, after obtaining the first alarm information, related persons skilled in the art (for example, an experimenter or an operation and maintenance engineer) process the dirt on the optical path #1 by using the alarm management module, thereby effectively avoiding a technical problem, such as service interruption, caused by the optical path dirt.

S608. The element management module determines that the element is normal.

Specifically, after the alarm management module receives the first alarm information, the related persons skilled in the art process the dirt on the optical path #1 in time. In this case, the element management module determines that each performance indicator of the element is normal, and an alarm of the alarm management module is eliminated.

S609. The alarm management module eliminates the alarm.

In the method shown in FIG. 6, the element management module reports the bit error alarm information to the alarm management module, and the alarm management module stores the real-time alarm information. After obtaining the real-time alarm information and determining the risky link based on the alarm information, the optical path dirt identification module periodically collects the performance data of the optical path from the element management system, determines and generates the first alarm information based on the performance data and determining of the dirt identification model, and sends the first alarm information to the alarm management module. The experimenter or the operation and maintenance engineer of a carrier processes the optical path dirt and eliminates the optical path dirt based on the alarm of the alarm management system, until the optical path dirt alarm of the alarm management module is eliminated. In actual application, the operation and maintenance engineer can directly determine a root cause of degradation of the optical path by using the alarm management module, and eliminate the dirt problem of the optical path in a timely manner, thereby improving operation and maintenance efficiency and reducing operation and maintenance costs.

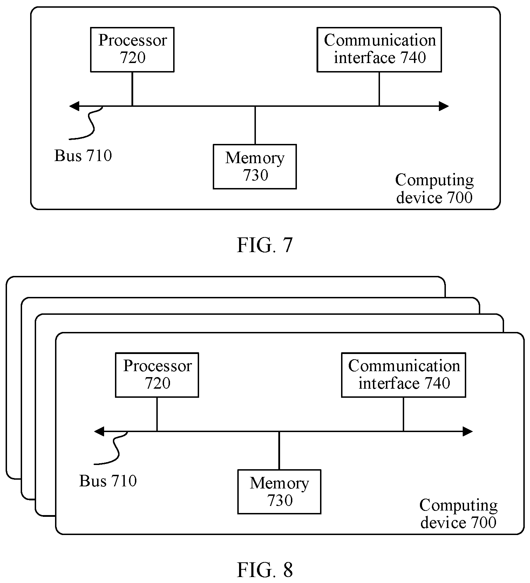

The foregoing describes in detail the optical path dirt identification method in embodiments of this application with reference to FIG. 1 to FIG. 6. This application further provides a computing device 700. The following describes, in detail with reference to FIG. 7, the computing device 700 provided in this application.

As shown in FIG. 7, the computing device 700 provided in this application includes a bus 710, a processor 720, a memory 730, and a communication interface 740. The processor 720, the memory 730, and the communication interface 740 communicate with each other through the bus 710. The computing device 700 may be a server or a terminal device. It should be understood that a quantity of processors and a quantity of memories in the computing device 600 are not limited in this application.

The bus 710 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is indicated by using only one line in FIG. 7. However, it does not indicate that there is only one bus or only one type of bus. The bus 710 may include a path for transmitting information between components (for example, the memory 730, the processor 720, and the communication interface 740) of the computing device 700.

The processor 720 may include any one or more of processors such as a central processing unit (central processing unit, CPU), a graphics processing unit (graphics processing unit, GPU), a microprocessor (microprocessor, MP), and a digital signal processor (digital signal processor, DSP).

The memory 730 may include a volatile memory (volatile memory), for example, a random access memory (random access memory, RAM). The processor 720 may alternatively include a nonvolatile memory (nonvolatile memory), for example, a read-only memory (read-only memory, ROM), a flash memory, a hard disk drive (hard disk drive, HDD), or a solid state drive (solid state drive, SSD).

The memory 730 stores executable code, and the processor 720 executes the executable code to separately implement the functions of the foregoing element management module 110, dirt identification module 120, alarm collection module 130, dirt identification model 121, alarm collection 122, and element collection 123, to implement the optical path dirt identification method. In other words, the memory 730 stores instructions used to perform the optical path dirt identification method.

The communication interface 740 uses a transceiver module, for example, but not limited to, a network interface card or a transceiver, to implement communication between the computing device 700 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 8, the computing device cluster includes at least one computing device 700. Memories 730 in one or more computing devices 700 in the computing device cluster may store same instructions used to perform the optical cable droop identification method.

In some possible implementations, alternatively, memories 730 in one or more computing devices 700 in the computing device cluster may separately store some instructions used to perform the optical cable droop identification method. In other words, a combination of the one or more computing devices 700 may jointly execute instructions used to perform the optical cable droop identification method.

It should be noted that memories 730 in different computing devices 700 in the computing device cluster may store different instructions, separately used to perform some functions of an optical cable droop identification system 120. In other words, instructions stored in memories 730 in different computing devices 700 may implement functions of one or more modules in the element management module 110, the dirt identification module 120, the alarm collection module 130, the dirt identification model 121, the alarm collection 122, and the element collection 123.

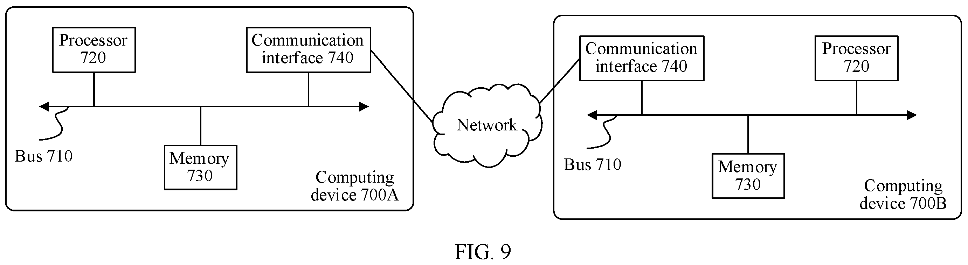

In some possible implementations, the one or more computing devices in the computing device cluster may be connected through a network. The network may be a wide area network, a local area network, or the like. FIG. 9 shows a possible implementation. As shown in FIG. 9, two computing devices 700A and 700B are connected through a network. Specifically, the computing devices are connected to the network through communication interfaces in the computing devices. In this possible implementation, a memory 730 in the computing device 700A stores instructions of the functions of the element management module 110 and the alarm collection module 130. In addition, a memory 730 in the computing device 700B stores instructions of the functions of the dirt identification module 120, the dirt identification model 121, the alarm collection 122, and the element collection 123.

For the connection manner that is of the computing device cluster and that is shown in FIG. 9, it is considered that in the optical cable droop identification method provided in this application, a large amount of data needs to be buffered, and a large amount of memory needs to be occupied. In addition, costs of large-capacity content are relatively high, and a memory capacity configured for the computing device is usually relatively small. Therefore, it is considered that the functions implemented by the dirt identification module 120, the dirt identification model 121, the alarm collection 122, and the element collection 123 are handed over to the computing device 700B for execution.

It should be understood that functions of the computing device 700A shown in FIG. 9 may alternatively be completed by a plurality of computing devices 700. Similarly, functions of the computing device 700B may alternatively be completed by a plurality of computing devices 700.

An embodiment of this application further provides another computing device cluster. For a connection relationship between computing devices in the computing device cluster, similarly refer to the connection manner of the computing device cluster in FIG. 8 and FIG. 9. A difference lies in that memories 730 in one or more computing devices 700 in the computing device cluster may store same instructions used to perform the optical cable droop identification method.

In some possible implementations, alternatively, memories 730 in one or more computing devices 700 in the computing device cluster may separately store some instructions used to perform the optical cable droop identification method. In other words, a combination of the one or more computing devices 700 may jointly execute instructions used to perform the optical cable droop identification method.

It should be noted that memories 730 in different computing devices 700 in the computing device cluster may store different instructions, to perform some functions of the optical cable droop identification method. In other words, instructions stored in memories 730 in different computing devices 700 may implement functions of one or more apparatuses in the element management module 110, the dirt identification module 120, the alarm collection module 130, the dirt identification model 121, the alarm collection 122, and the element collection 123.

An embodiment of this application further provides a computer program product including instructions. The computer program product may be a software or program product that includes instructions and that can be run on a computing device or stored in any usable medium. When the computer program product is run on at least one computing device, the at least one computing device is enabled to perform the optical cable droop identification method.

An embodiment of this application further provides a computer-readable storage medium. The computer-readable storage medium may be any usable medium accessible by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid state drive), or the like. The computer-readable storage medium includes instructions, and the instructions instruct the computing device to perform the optical cable droop identification method.

The term "and/or" in this specification describes only an association relationship between associated objects and indicates that three relationships may exist. For example, A and/or B may indicate the following three cases: Only A exists, both A and B exist, and only B exists, where A and B may be singular or plural. In addition, the character "/" in this specification generally indicates an "or" relationship between associated objects, but may alternatively indicate an "and/or" relationship. For details, refer to the context for understanding.

In this application, "a plurality of" means to two or more. The expression "at least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

Sequence numbers of the foregoing processes do not mean execution sequences in various embodiments of this application. The execution sequences of the processes should be determined based on functions and internal logic of the processes, and should not constitute any limitation on the implementation processes of embodiments of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing embodiments are merely intended to describe the technical solutions of this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of this application.

## Claims

1. An optical path dirt identification method, comprising:
obtaining first data, wherein the first data is performance data that is of a port of a first optical path and that is collected in a first cycle; and
determining, based on the first data and a dirt identification model, whether dirt occurs on an end face of the first optical path, wherein the dirt identification model is determined based on second data, the second data is performance data of the port of the first optical path in a second cycle, and the second data further comprises a status of whether dirt occurs on the first optical path in the second cycle.

2. The method according to claim 1, wherein the determining, based on the first data and the dirt identification model, whether dirt occurs on the first optical path comprises:
preprocessing the first data to obtain third data; and
determining, based on the third data and the dirt identification model, whether dirt occurs on the end face of the first optical path.

3. The method according to claim 1 or 2, wherein when it is determined, based on the first data and the dirt identification model, that dirt occurs on the optical path, the method further comprises:
sending first alarm information, wherein the first alarm information indicates that dirt occurs on the end face of the first optical path.

4. The method according to any one of claims 1 to 3, wherein before the first data is obtained, the method further comprises:
obtaining real-time alarm information; and
determining link information of the first optical path based on the real-time alarm information, wherein the first optical path is a risky link.

5. The method according to claim 4, wherein the link information comprises one or more of the following:
a source element name, a source element port, a sink element name, and a sink element port.

6. The method according to any one of claims 1 to 5, wherein the first data comprises one or more of the following:
receive optical power, a quantity of blocks uncorrected through forward error correction FEC, a bit error rate before forward error correction FEC, a bit error rate after forward error correction FEC, a quantity of cyclic redundancy check CRC error reports, transmit optical power, input bandwidth utilization of a port of an optical path, output bandwidth utilization of a port of an optical path, a link status, and a protocol status.

7. An optical path dirt identification apparatus, comprising:
an element management module, configured to obtain first data, wherein the first data is performance data that is of a port of a first optical path and that is collected in a first cycle; and
an optical path dirt identification module, configured to determine, based on the first data and a dirt identification model, whether dirt occurs on an end face of the first optical path, wherein the dirt identification model is determined based on second data, the second data is performance data of the port of the first optical path in a second cycle, and the second data further comprises a status of whether dirt occurs on the first optical path in the second cycle.

8. The apparatus according to claim 7, wherein the optical path dirt identification module is further configured to preprocess the first data to obtain third data; and the optical path dirt identification module is further configured to determine, based on the third data and the dirt identification model, whether dirt occurs on the end face of the first optical path.

9. The apparatus according to claim 7 or 8, wherein the apparatus further comprises:
an alarm management module, further configured to send first alarm information, wherein the first alarm information indicates that dirt occurs on the end face of the first optical path.

10. The apparatus according to any one of claims 7 to 9, wherein the optical path dirt identification module is further configured to: obtain real-time alarm information, and determine link information of the first optical path based on the real-time alarm information, wherein the first optical path is a risky link.

11. The apparatus according to claim 10, wherein the link information comprises one or more of the following:
a source element name, a source element port, a sink element name, and a sink element port.

12. The apparatus according to any one of claims 7 to 11, wherein the first data comprises one or more of the following:
receive optical power, a quantity of blocks uncorrected through forward error correction FEC, a bit error rate before forward error correction FEC, a bit error rate after forward error correction FEC, a quantity of cyclic redundancy check CRC error reports, transmit optical power, input bandwidth utilization of a port of an optical path, output bandwidth utilization of a port of an optical path, a link status, and a protocol status.

13. A computing device cluster, comprising at least one computing device, wherein each computing device comprises a processor and a memory, and
a processor of the at least one computing device is configured to execute instructions stored in a memory of the at least one computing device, to enable the computing device cluster to perform the method according to any one of claims 1 to 6.

14. A computer program product comprising instructions, wherein when the instructions are run by a computing device cluster, the computing device cluster is enabled to perform the method according to any one of claims 1 to 6.

15. A computer-readable storage medium, comprising computer program instructions, wherein when the computer program instructions are executed by a computing device cluster, the computing device cluster performs the method according to any one of claims 1 to 6.
